# EUROPÄISCHE PATENTSCHRIFT

(11) **EP 0 849 199 B1**
(45) Veröffentlichungstag und Bekanntmachung des Hinweises auf die Patenterteilung: **07.03.2001**
(21) Anmeldenummer: 97121501.7
(22) Anmeldetag: 06.12.1997
(51) Int. Cl.: B65G 59/02

(54) **Verfahren und Vorrichtung zum Entpalettieren von Artikeln**
Method and device for depalletizing articles
Méthode et dispositif de dépalletisation pour articles

(30) Priorität: 21.12.1996 DE 19653953
(43) Veröffentlichungstag der Anmeldung: 24.06.1998
(73) Patentinhaber: TOPACK Verpackungstechnik GmbH, 21493 Schwarzenbek (DE)
(72) Erfinder: Donner, Knut, 21033 Hamburg (DE); Hoppe, Hans-Jürgen, 25704 Epenwöhrden (DE); Keil, Uwe, 21493 Schwarzenbek (DE)
(74) Vertreter: Herrmann, Günther

(56) Entgegenhaltungen:
- EP-A- 0 363 722
- EP-A- 0 532 949
- EP-A- 0 743 270

## Beschreibung

Die Erfindung betrifft ein Verfahren und eine Vorrichtung zum Entpalettieren von unter Einfügung von flachen Zwischenlagen auf Paletten gestapelten Zuschnittstapeln gemäß dem Oberbegriff des Anspruchs 1 bzw. des Anspruchs 8.

Verfahren und Vorrichtungen dieser Art sind z.B. durch die EP 0 532 949 A1, die EP 0 363 722 B2 oder die EP 0 354 873 B1 bekannt. Sie dienen zum Vereinzeln von auf Paletten aufgeschichteten Zuschnittstapeln, bevor diese nacheinander einer Verpakkungsmaschine, insbesondere einer Zigarettenpackmaschine für das Herstellen von Zigarettenverpackungen übergeben werden.

Moderne Verpackungsmaschinen hoher Leistungsfähigkeit verarbeiten große Mengen von Papier- oder Kartonzuschnitten. Um die lückenlose Beschickung dieser Maschinen mit Packmaterialzuschnitten zu gewährleisten, werden die Packmaterialzuschnitte auf Paletten bereitgestellt. Auf den Paletten sind die Packmaterialzuschnitte stapelweise angeordnet, wobei die Zuschnittstapel Schichten bilden, zwischen denen jeweils eine Zwischenlage aus Pappe oder dergleichen liegt.

Zum Abnehmen eines Zuschnittstapels von einer solchen Palette wird ein an einem Greifkopf angebrachtes Einstechwerkzeug zwischen der Unterseite des betreffenden Zuschnittstapels und der darunterliegenden Zwischenlage eingeführt und dann durch Verfahren des Greifkopfes der Zuschnittstapel abgehoben und an ein Fördersystem übergeben, das ihn zur betreffenden Packmaschine transportiert. Um das Einstechwerkzeug zwischen dem abzunehmenden Zuschnittstapel und der Zwischenlage einführen zu können, wird es durch Verfahren des Greifkopfes entlang dreier Achsen entsprechend vor dem Zuschnittstapel positioniert. Durch horizontales Verfahren wird das Einstechwerkzeug dann zwischen dem Zuschnittstapel und der Zwischenlage eingeführt. Dabei kann es geschehen, daß das Einstechwerkzeug sich nicht glatt zwischen dem Zuschnittstapel und der Zwischenlage bewegt, sondern in die Zwischenlage einsticht. Wird jetzt das Einstechwerkzeug mit dem daraufliegenden Zuschnittstapel von der Palette abgehoben, so reißt es die Zwischenlage mit, was die übrigen noch auf der Zwischenlage befindlichen Zuschnittstapel durcheinanderwirft. Um den dadurch entstehenden Schaden zu beheben, ist eine zeitaufwendige Handarbeit erforderlich.

Nach der EP 0 74 32 70 ist zum Zweck einer Schadensbegrenzung speziell beim Einstich des Einstechwerkzeuges in den untersten Zuschnitt des Zuschnittstapels eine Einrichtung zur Überwachung des ordnungsgemäßen Einführens des Einstechwerkzeuges bekannt, welche durch ein an der Unterseite des Einstechwerkzeuges angeordnetes Reflexionselement und zugeordnetes Empfängerelement eine entsprechende Verformung des aufgespießten Zuschnitts erkennt.

Der vorliegenden Erfindung liegt nun die Aufgabe zugrunde, speziell zur Vermeidung von durch Einstich in die Zwischenlage drohenden Folgeschäden ein weiteres Verfahren und eine weitere Vorrichtung der eingangs angegebenen Art aufzuzeigen.

Gelöst wird diese Aufgabe für ein Verfahren der eingangs angegebenen Art erfindungsgemäß mit den kennzeichnenden Merkmalen des Anspruchs 1. Fortführungen und vorteilhafte Ausgestaltungen des erfindungsgemäß vorgeschlagenen Verfahrens sind in den Unteransprüchen 2 bis 7 enthalten. Durch die Maßnahmen des Anspruchs 1 wird gewährleistet, daß eine Zerstörung der Ordnung der auf der Palette aufgestapelten Zuschnittstapel beim Abnehmen eines Stapels rechtzeitig verhindert werden kann. Da sich das Einstechen des Einstechwerkzeugs in die Zwischenlage in einem Anheben der Zwischenlage zusammen mit dem abzunehmenden Zuschnittstapel zeigt, ist die Position der Zwischenlage ein zuverlässiges Kriterium für den ordnungsgemäßen Ablauf des Entpalettierens. Mit den Maßnahmen des Anspruchs 2 ist sichergestellt, daß der Vereinzelungsvorgang solange unterbrochen wird, bis die Störung vom Operator oder automatisch beseitigt wird. Die Maßnahmen der Ansprüche 4 und 5 stellen eine bevorzugte Ausführungsform des erfindungsgemäß vorgeschlagenen Verfahrens dar. Die Ansprüche 6 und 7 betreffen die Art der Erfassung der Zwischenlagenposition.

Bei einer Vorrichtung der eingangs beschriebenen Art wird die der Erfindung zugrundeliegende Aufgabe mit den kennzeichnenenden Merkmalen des Anspruchs 8 gelöst, wobei die vorgeschlagene Lösung sich die Erkenntnis zunutze macht, daß die Position der Zwischenlage nach dem Abheben des Einstechwerkzeuges ein zuverlässiges Kriterium für die ordnungsgemäße Funktion der Entpalettierung ist. Die Ansprüche 9 bis 14 enthalten Fortführungen und vorteilhafte Ausgestaltungen der Vorrichtung nach der Erfindung. So betreffen die Ansprüche 9 bis 11 die Ausbildung der Überwachungseinrichtung. Als Sensoren, welche die Position der Zwischenlage nach dem Anheben des Greifkopfes erfassen, können ein optischer Lichttaster oder ein pneumatischer Drucksensor vorgesehen sein. Anspruch 12 betrifft als Fortführung der Erfindung eine bevorzugte Ausgestaltung der Erfindung, die es ermöglicht, den nicht ordnungsgemäßen Ablauf des Entpalettierens festzustellen, bevor ein größerer Schaden an der Palette angerichtet wird.

Die Erfindung bietet den Vorteil, daß Störungen beim Entpalettieren von Zuschnittstapeln so rechtzeitig erkannt werden, daß sie ohne großen Zeitaufwand und ohne größeren Materialverlust beseitigt werden können. Aufgrund der Erfindung führt das Einstechen des Einstechwerkzeuges in die Zwischenlage nicht mehr zu größeren Unterbrechungen der Beschickung der angeschlossenen Packmaschinen mit Packmaterialzuschnitten.

Die Erfindung wird nun anhand der Zeichnung näher erläutert.

Es zeigen
- Figur 1: eine perspektivische Ansicht einer mit Zuschnittstapeln beladenen Palette,
- Figur 2: eine Seitenansicht eines Ausführungsbeispiels der Vorrichtung nach der Erfindung in schematischer Darstellung und
- Figur 3: eine andere Arbeitsposition der Vorrichtung der Figur 2 zur Darstellung des erfindungsgemäß vorgeschlagenen Verfahrens.

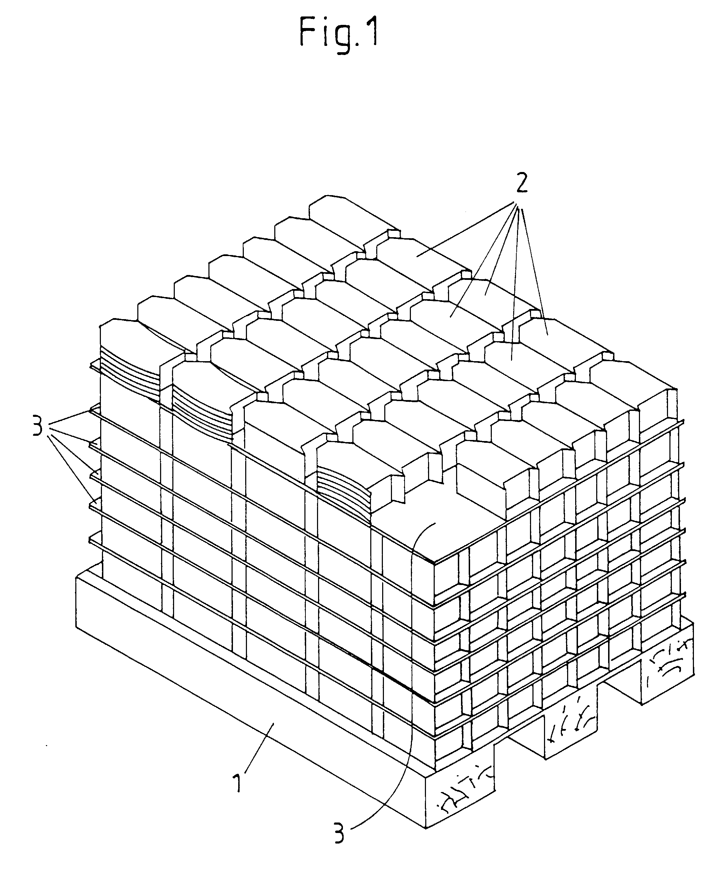

In Figur 1 ist eine Palette 1 dargestellt, auf welcher ein Vorrat von Zuschnittstapeln 2 aufgeschichtet ist. Zwischen den verschiedenen Schichten von Zuschnittstapeln sind Zwischenlagen 3 angeordnet, die die Stapelkonfiguration auf der Palette stabilisieren.

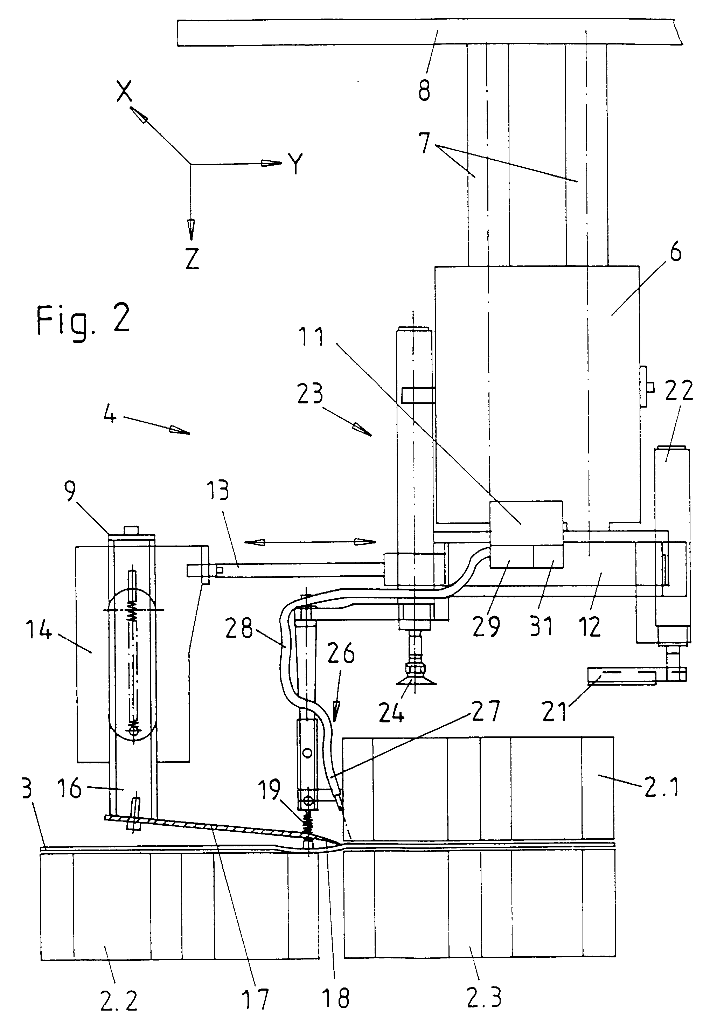

Figur 2 zeigt in einer Seitenansicht den Aufbau und das Funktionsprinzip eines Greifkopfes einer Vorrichtung nach der Erfindung. Die Vorrichtung zum Entpalettieren von auf einer Palette gestapelten Zuschnittstapeln 2 ist generell mit 4 bezeichnet. Von den auf einer Palette aufgestapelten Zuschnittstapeln 2 sind drei Stück mit den Bezeichnungen 2.1, 2.2 und 2.3 dargestellt. Man sieht, daß übereinanderliegende Zuschnittstapel durch die Zwischenlage 3 getrennt sind.

Die Entpalettiervorrichtung 4 weist einen Greifkopf 6 auf, der an einer Führung 7 vertikal in Z-Richtung und an einer Führung 8 horizontal in Y-Richtung verfahrbar ist. Die Y-Führung 8 ist, was nicht dargestellt ist, selbst an einem Schlitten in X-Richtung verfahrbar. Das räumliche Koordinatensystem ist in Figur 1 zur Festlegung der Achsen eingezeichnet. Auf diese Weise kann der gesamte Greifkopf räumlich in drei Achsen verfahren werden. Mindestens die vertikale Z-Position des Greifkopfs 6 an der Führung 7 kann zur Grobpositionierung mit einem nicht dargestelten Positionssensor erfaßt werden.

Der Greifkopf 6 trägt eine horizontal in einer Führungseinrichtung 12 horizontal in Y-Richtung bewegbare Führungsstange 13, an deren freiem Ende ein vertikales Führungselement 14 angebracht ist. Das Führungselement 14 weist eine Halterung 16 für ein Einstechwerkzeug 17 auf, das an seiner Vorderseite eine scharfe Einstechkante 18 hat. Das Einstechwerkzeug 17 ist als eine flache Zunge ausgebildet, wie das etwa in der EP 0 532 949 A1 dargestellt ist. Es verläuft leicht geneigt zur Horizontalen nach unten, so daß seine Einstechkante 18 durch Herunterfahren des Greifkopfes 6 oder des Führungselemts 14 in Z-Richtung auf die Zwischenlage 3 aufgesetzt werden kann. Dazu ist die Halterung 16 im Führungselement 14 vertikal verfahrbar geführt und angetrieben. Der Antrieb ist nicht dargestellt. Ein Sensor 9 überwacht dabei die Z-Position der Halterung 16 und damit des Einstechwerkzeugs 17. Mit einem weiteren Sensor 11 wird die Position des Führungselements 14 mit dem Einstechwerkzeug 17 horizontal in Y-Richtung überwacht. Weitere dem Einstechwerkzeug zugeordnete, in der Zeichnung nicht dargestellte Positionssensoren dienen zur Feinpositionierung des Einstechwekzeugs 17 in X- und Y-Richtung relativ zum jeweils abzunehmenden Stapel 2.1.

Die Führungseinrichtung 12 und die Führungsstange 13 können als pneumatische oder hydraulische Kolben-Zylindereinheit ausgebildet sein. Zur genauen Positionierung kann die Führungsstange 13 aber auch in der Führungseinrichtung 12 elektromotorisch angetrieben sein.

Der Greifkopf 6 weist zur Erleichterung des Einführens der Einstechkante 18 des Einstechwerkzeugs 17 zwischen dem Zuschnittstapel 2.1 und der Zwischenlage 3 Niederhalter 19 auf, die beim Einstechen beidseits des Einstechwerkzeugs 17 auf die Zwischenlage 3 drücken. Bezüglich des Aufbaus des Greifkopfes 6 allgemein und der Anordnung der Niederhalter im besonderen wird auf die oben bereits erwähnte EP 0 532 949 A1 verwiesen.

Ein weiterer Niederhalter 21, der am Greifkopf 6 befestigt ist, drückt beim Anheben eines Stapels 2.1 gegen die Oberseite des Stapels, um dessen Konfiguration beim Anheben zu erhalten. Der Niederhalter 21 ist mittels eines Antriebes 22 auf und ab bewegbar.

Schließlich ist am Greifkopf 6 ein Abnahmeorgan 23 mit einem Saugnapf 24 angebracht, mit dem eventuell nicht mitgegriffene Einzelzuschnitte von der Zwischenlage 4 oder der Palette abgenommen werden können. Im Normalbetrieb dient der Saugnapf als Stempel zum Festhalten eines Stapels 2.1 auf dem Einstechwerkzeug 17.

Zum Überwachen des ordnungsgemäßen Einführens des Einstechwerkzeugs 17 zwischen dem Zuschnittstapel 2.1 und der Zwischenlage 3 weist der Greifkopf 6 eine Überwachungseinrichtung 26 auf, die als optischer Tastkopf ausgebildet ist. Dieser optische Tastkopf ist von dem Lichtaustritts- und Eintrittsende 27 eines Lichtleiters 28 gebildet, der an einer optischen Sensoreinrichtung 29 angeschlossen ist. Diese Sensoreinrichtung 29 weist eine nicht im Einzelnen dargestellte Lichtquelle auf, die Prüflicht in den Lichtleiter 28 abgibt, das durch dessen Austrittsende 27 zur Zwischenlage 3 hin austritt. An der Zwischenlage 3 reflektiertes Licht wird vom Eintrittsende 27 des Lichtleiters 28 aufgenommen und an einen ebenfalls nicht näher dargestellten optischen Sensor in der Sensoreinrichtung 29 abgegeben, der ein entsprechendes Prüfsignal erzeugt. Die Sensoreinrichtung 29 ist mit einer Steuer- und Auswertanordnung 31 verbunden, an welche auch der Positionssensor 9 und weitere nicht dargestellte Sensoren angeschlossen sind. Die Auswertanordnung 31 ist hier lediglich schematisch angedeutet. Tatsächlich ist sie in der Regel in die vorhandene Maschinensteuerung integriert.
Zum Abnehmen eines Zuschnittstapels 2.1 von einer Palette wird zunächst der Greifkopf 6 durch Verfahren entlang den Führungen 7 und 8 in Z- und Y-Richtung und durch Verfahren in X-Richtung vor dem Zuschnittstapel 2.1 grob positioniert. Anschließend erfolgt unter Mitwirkung der nicht dargestellten, dem Einstechwerkzeug 17 zugeordneten, beispielsweise an der Halterung des Niederhalters 19 angebrachten Positionssensoren eine Feinpositionierung des Greifkopfes 6 in X- und Y-Richtung. Durch Verfahren des Einstechwerkzeuges 17 in Z-Richtung entlang dem Tragelement 14 wird die Einstechkante 18 dann so vor dem Zuschnittstapel 2.1 positioniert, daß das Einstechen möglichst störungsfrei erfolgen kann. Der Positionssensor 9 der Z-Position meldet das Erreichen der für das Einstechen des Einstechwerkzeugs 17 vorgesehenen Sollposition in Z-Richtung. Die Einstechkante 18 des Einstechwerkzeugs 17 steht nun direkt vor dem Zuschnittstapel 2.1, wie das in Figur 2 dargestellt ist, wobei der Greifkopf 6 mit den Niederhaltern 19 die Zwischenlage 3 etwas herabdrückt, so daß die Einstechkante 18 besser unter den Zuschnittstapel 2.1 fahren kann.

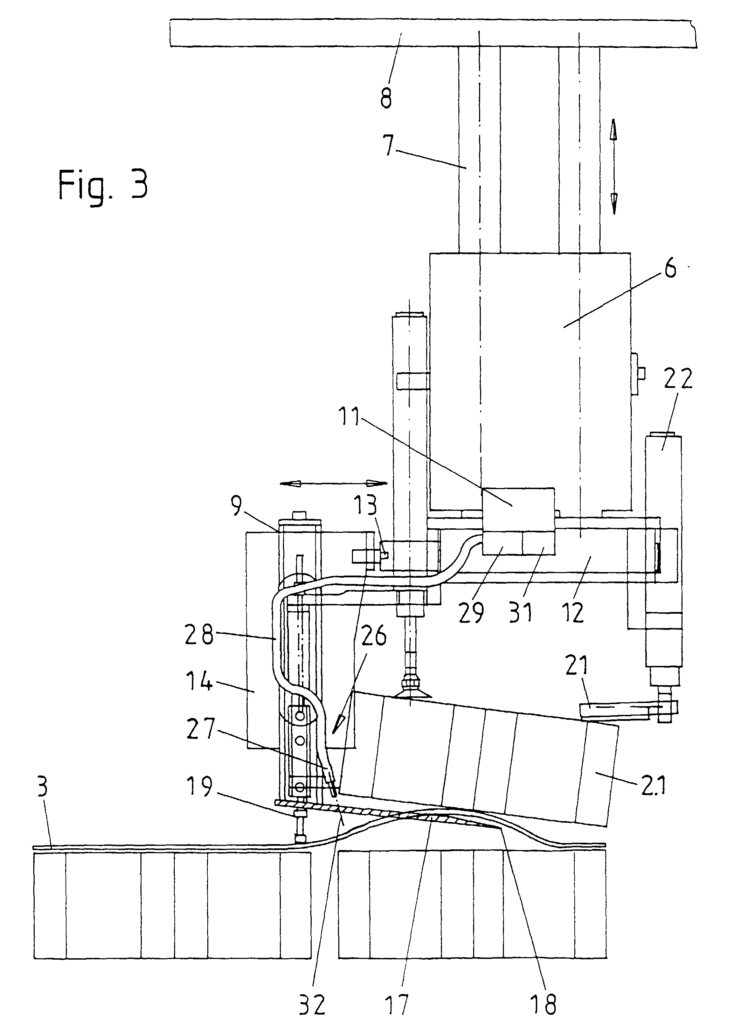

Aus dieser Position heraus wird das Einstechwerkzeug 17 in horizontaler Richtung an den Führungsstangen 13 entlang unter den Zuschnittstapel 2.1 geschoben. Dabei kann es passieren, was in Figur 3 dargestellt ist, daß sich die Zwischenlage 3 aufwölbt und das Einstechwerkzeug 17 in die Zwischenlage einsticht. Das bedeutet, daß die Einstechkante 18 des Einstechwerkzeugs 17 ein Loch in die Zwischenlage 3 reißt und diese nun nicht ordnungsgemäß vollständig unter dem Einstechwerkzeug, sondern wenigstens teilweise zwischen dem Einstechwerkzeug 17 und dem darüberliegenden Zuschnittstapel 2.1 liegt. Wenn dieser Fehler nicht rechtzeitig erkannt wird und der Greifer den Zuschnittstapel infolgedessen trotzdem abtransportiert, wird die ganze Zwischenlage mit allen noch daraufliegenden Zuschnittstapeln hochgerissen, was dazu führt, daß die in den Zuschnittstapeln aufgestapelten Zuschnitte durcheinandergeworfen werden. Das erfordert dann aufwendige Aufräumarbeiten an der Palette.

Um nun rechtzeitig zu erkennen, ob das Einführen des Einstechwerkzeugs 17 unter dem Zuschnittstapel 2.1 ordnungsgemäß vonstattengegangen ist, wird gemäß der Erfindung der Zuschnittstapel 2.1 zunächst in vertikaler Richtung (Z-Richtung) entlang der Verfahrachsen 7 um einen kleinen Betrag, beispielsweise etwa 10 mm, angehoben. Figur 3 zeigt diese Situation nach dem Anheben. Hat der Greifkopf die vorgesehene Prüfposition erreicht, so wird mit der Überwachungseinrichtung 26 die Position der Zwischenlage 3 abgefragt. Hierzu wird über das Lichtaustrittsende des Lichtleiters 28 ein Lichtstrahl 32 zur Zwischenlage ausgesandt und das an der Zwischenlage reflektierte Licht aufgenommen. Mit dem Lichtleiter 28 wird dieses reflektierte Licht zur Sensoreinrichtung 29 geleitet, die ein der Entfernung der Zwischenlage 3 von dem Austrittsende 27 des Lichtleiters, also der Position der Zwischenlage entsprechendes Signal erzeugt. Dieses Signal wird von der Steuer- und Auswertanordnung 31 zu einem entsprechenden Funktionssignal verarbeitet.
Ist das Einführen des Einstechwerkzeugs 17 zwischen dem Zuschnittstapel 2.1 und der Zwischenlage 3 ordnungsgemäß verlaufen, so liegt auf dem angehobenen Einstechwerkzeug nur der Stapel 2.1, während die Zwischenlage ihre ebene Position auf den darunterliegenden Stapeln behält. Die Überwachungseinrichtung 26 stellt die Sollposition der Zwischenlage in der vorgegebenen Entfernung vom Ende des Lichtleiters 28 fest. Die Steuer- und Auswertanordnung 31 erzeugt aufgrund eines entsprechenden Signals der Sensoreinrichtung 29 ein Funktionssignal mit der Bedeutung "Zwischenlage nicht eingestochen", nach dem der Greifkopf 6 den Zuschnittstapel 2.1 ohne Verzögerung weiter transportiert.

Ist der Vorgang des Einstechens dagegen nicht ordnungsgemäß abgelaufen, weil das Einstechwerkzeug die Zwischenlage durchstochen hat, so hebt das Einstechwerkzeug 17, 18 zusammen mit dem Zuschnittstapel 2.1 auch die Zwischenlage 3 an, wie das in Figur 3 gezeigt ist. Die Überwachungseinrichtung 26 stellt infolgedessen einen zu kleinen Abstand zwischen der Zwischenlage und dem Ende des Lichtleiters fest, weil die Lage der Zwischenlage 3 von ihrer Sollposition abweicht. In diesem Fall verarbeitet die Auswertanordnung 31 das entsprechende Signal der Sensoreinrichtung 29 zu einem Funktionssignal mit der Bedeutung "Zwischenlage eingestochen", was zu einem Anhalten der Maschine führt. Der Operator hat nun die Möglichkeit den aufgetretenen Fehler zu beseitigen.

Die vorliegende Erfindung beruht also auf der Erkenntnis, daß bei einem nicht ordnungsgemäß erfolgten Einführen des Einstechwerkzeuges zwischen einem zu entnehmenden Zuschnittstapel 2.1 und der Zwischenlage 3 für den weiteren Verlauf des Entpalettierens insbesondere das Einstechen des Einstechwerkzeuges in die Zwischenlage kritisch ist. Die vorgeschlagene Überwachung der Position der Zwischenlage nach dem ersten Anheben des Greifkopfes und des auf dem Einstechwerkzeug liegenden Zuschnittstapels gibt auf einfache Weise zuverlässigen Aufschluß über den ordnungsgemäßen Ablauf des Einstechvorgangs.

Anstelle der beschriebenen optischen Überwachungseinrichtung 26 sind auch andere Ausführungsformen einsetzbar. So kann die Sensoreinrichtung 29 selbst mit Lichtquelle und Sensorik am Niederhalter 19 oder an einer anderen geeigneten Stelle des Greifkopfes angebracht sein, so daß der Lichtleiter 28 entfallen kann. Anstelle einer optischen oder der oben erwähnten pneumatischen Überwachungseinrichtung kann auch ein mechanischer Taster eingesetzt werden, um das Anheben der Zwischenlage 3 nach einem Einstechen zu erfassen.

## Patentansprüche

1. Verfahren zum Entpalettieren von unter Einfügung von flachen Zwischenlagen auf Paletten gestapelten Zuschnittstapeln, bei dem ein an einem verfahrbaren Greifkopf angebrachtes, etwa waagerecht ausgerichtetes Einstechwerkzeug vor einem Zuschnittstapel positioniert und etwa horizontal unter den Zuschnittstapel geschoben wird und bei dem durch gesteuertes Verfahren des Greifkopfes der Zuschnittstapel von der Zwischenlage abgenommen wird, wobei das ordnungsgemäße Einführen des Einstechwerkzeugs zwischen dem Zuschnittstapel und der Zwischenlage überwacht und ein vom Verlauf und/oder Ergebnis des Einstechvorganges abhängiges Funktionssignal erzeugt wird, dadurch gekennzeichnet, daß das Einstechwerkzeug unter dem Zuschnittstapel zunächst um eine kurze Distanz angehoben wird, daß nach dem Anheben des Einstechwerkzeugs die Position der Zwischenlage geprüft wird und daß ein von der Position der Zwischenlage abhängiges Funktionssignal erzeugt wird.

2. Verfahren nach Anspruch 1, dadurch gekennzeichnet, daß infolge eines erfaßten, nicht ordnungsgemäßen Verlaufs des Einstechvorganges als Funktionssignal ein Störungssignal erzeugt wird und daß aufgrund des Störungssignals die weitere Bewegung des Greifkopfs zum Zwecke der Störungsbeseitigung angehalten wird.

3. Verfahren nach Anspruch 1 oder 2, dadurch gekenzeichnet, daß das Einstechwerkzeug zum Positionieren vor dem Zuschnittstapel auf der Zwischenlage aufgesetzt wird.

4. Verfahren nach Anspruch 1, dadurch gekennzeichnet, daß die Position der Zwischenlage unter dem angehobenen Einstechwerkzeug erfaßt wird und daß ein Störungssignal erzeugt wird, wenn das Einstechwerkzeug die Zwischenlage mit angehoben hat.

5. Verfahren nach Anspruch 1, dadurch gekennzeichnet, daß das Einstechwerkzeug zum Prüfen der Position der Zwischenlage etwa 10 mm angehoben wird.

6. Verfahren nach Anspruch 1, dadurch gekennzeichnet, daß die Position der Zwischenlage optisch erfaßt wird.

7. Verfahren nach Anspruch 1, dadurch gekennzeichnet, daß die Position der Zwischenlage pneumatisch oder mechanisch erfaßt wird.

8. Vorrichtung zum Entpalettieren von unter Einfügung von flachen Zwischenlagen (3) auf Paletten (1) gestapelten Zuschnittstapeln (2) mit einem verfahrbaren Greifkopf (6) und einem am Greifkopf angeordneten, etwa waagerecht ausgerichteten Einstechwerkzeug (17, 18), welches durch Verfahren des Greifkopfs vor dem Zuschnittstapel positionierbar und zum Aufnehmen eines Zuschnittstapels mit einer etwa horizontalen Bewegung zwischen Zuschnittstapel und Zwischenlage einführbar ist und das durch Verfahren des Greifkopfes den aufgenommenen Zuschnittstapel von der Zwischenlage abnimmt, wobei dem Greifkopf eine Einrichtung (26) zur Überwachung des ordnungsgemäßen Einführens des Einstechwerkzeuges zwischen dem Zuschnittstapel (2.1) und der Zwischenlage zugeordnet ist und daß die Überwachungseinrichtung (26) an eine in Abhängigkeit vom Verlauf des Einstechvorgangs ein Funktionssignal abgebende Auswertanordnung (31) angeschlossen ist, dadurch gekennzeichnet, daß die Überwachungseinrichtung (26) Mittel (27, 28, 29) zum Erfassen der Position der Zwischenlage (3) und zum Erzeugen eines der Position der Zwischenlage entsprechenden Funktionssignals aufweist.

9. Vorrichtung nach Anspruch 8, dadurch gekennzeichnet, daß als Überwachungseinrichtung (26) am Greifkopf (6) ein zur Zwischenlage (3) hin ausgerichteter Positionssensor (27) angebracht ist.

10. Vorrichtung nach Anspruch 9, dadurch gekennzeichnet, daß der Positionssensor (27, 28, 29) die Lage der Zwischenlage (3) unter dem Einstechwerkzeug (17, 18) erfassend ausgebildet und angeordnet ist.

11. Vorrichtung nach einem der Ansprüche 8 bis 10, dadurch gekennzeichnet, daß als Positionssensor (28) am Greifkopf (6) ein zur Zwischenlage (3) ausgerichteter Lichttaster (27,28,29) mit einer Lichtquelle und einem an der Zwischenlage (3) reflektiertes Licht der Lichtquelle empfangenden und ein entsprechendes Positionssignal an die Auswertanordnung (31) abgebenden Sensor vorgesehen ist.

12. Vorrichtung nach einem der Ansprüche 8 bis 11, dadurch gekennzeichnet, daß ein den Greifkopf (6) nach dem Einführen des Einstechwerkzeugs (17,18) zwischen dem Zuschnittstapel (2.1) und der Zwischenlage (3) aufwärts in eine Zwischenposition bewegender Antrieb vorgesehen ist, daß eine das Erfassen der Position der Zwischenlage (3) durch den Positionssensor (26) nach dem Erreichen der Zwischenposition und die Bildung eines die Lage der Zwischenlage (3) repräsentierenden Positionssignals initiierende Steueranordnung (31) vorgesehen ist und daß die Auswertanordnung (31) das Positionssignal zu einem die Lage der Zwischenlage (3) repräsentierenden Funktionssignal verarbeitend ausgebildet ist.

13. Vorrichtung nach einem der Ansprüche 8 bis 12, dadurch gekennzeichnet, daß als Positionssensor (26) am Greifkopf (6) ein zur Zwischenlage (3) ausgerichteter pneumatischer Drucksensor oder ein mechanischer Taster vorgesehen ist.

14. Vorrichtung nach Anspruch 13, dadurch gekennzeichnet, daß als pneumatischer Drucksensor ein in Abhängigkeit von ihrer Lage an der Zwischenlage (3) einen Staudruck bildender und erfassender Drucksensor vorgesehen ist.

## Claims

1. A method of removing from pallets stacks of blanks stacked on pallets with the insertion of flat intermediate layers, in which a penetration tool attached to a movable gripping head and orientated substantially horizontally is positioned in front of a stack of blanks and is pressed substantially horizontally under the stack of blanks, and in which the stack of blanks is removed from the intermediate layer by controlled travel of the gripping head, wherein the proper insertion of the penetration tool between the stack of blanks and the intermediate layer is monitored and a function signal dependent upon the course and/or the result of the penetration procedureis delivered, **characterized in that** the penetration tool is first raised by a short distance under the stack of blanks, the position of the intermediate layer is checked after the raising of the penetration tool, and a function signal dependent upon the position of the intermediate layer is delivered.

2. A method according to Claim 1, **characterized in that** as a result of detecting an incorrect course of the penetration procedure an error signal is delivered as a function signal, and on the basis of the error signal the further movement of the gripping head is stopped in order to rectify the error.

3. A method according to Claim 1 or 2, **characterized in that** the penetration tool is placed on the intermediate layer for positioning in front of the stack of blanks.

4. A method according to Claim 1, **characterized in that** the position of the intermediate layer under the raised penetration tool is detected, and an error signal is delivered if the penetration tool has jointly raised the intermediate layer.

5. A method according to Claim 1, **characterized in that** the penetration tool is raised approximately 10 mm in order to check the position of the intermediate layer.

6. A method according to Claim 1, **characterized in that** the position of the intermediate layer is detected optically.

7. A method according to Claim 1, **characterized in that** the position of the intermediate layer is detected pneumatically or mechanically.

8. A device for removing from pallets (1) stacks (2) of blanks stacked on pallets (1) with the insertion of flat intermediate layers (3), with a movable gripping head (6) and a penetration tool (17, 18) which is mounted on the gripping head and orientated substantially horizontally and which can be positioned in front of the stack of blanks by moving the gripping head and, in order to receive a stack of blanks, can be inserted with substantially horizontal movement between the stack of blanks and the intermediate layer and which removes the received stack of blanks from the intermediate layer by the travel of the gripping head, wherein a device (26) for monitoring the proper insertion of the penetration tool between the stack (2.1) of blanks and the intermediate layer is associated with the gripping head, and the monitoring device (26) is connected to an evaluation device (31) which delivers a function signal in accordance with the course of the penetration procedure, **characterized in that** the monitoring device (26) has means (27, 28, 29) for detecting the position of the intermediate layer (3) and for delivering a function signal corresponding to the position of the intermediate layer.

9. A device according to Claim 8, **characterized in that** a position sensor (27) orientated towards the intermediate layer (3) is attached to the gripping head (6) as a monitoring device (26).

10. A device according to Claim 9, **characterized in that** the position sensor (27, 28, 29) is designed and arranged so as to detect the position of the intermediate layer (3) under the penetration tool (17, 18).

11. A device according to one of Claims 8 to 10, **characterized in that** a light sensor (27, 28, 29), which is orientated towards the intermediate layer (3) and which has a light source and a sensor receiving light from the light source reflected at the intermediate layer (3) and delivering a suitable position signal to the evaluation device (31) is provided on the gripping head (6) as a position sensor (28).

12. A device according to one of Claims 8 to 11, **characterized in that** a drive moving the gripping head (6) upwards into an intermediate position after the insertion of the penetration tool (17, 18) between the stack of blanks (2.1) and the intermediate layer (3) is provided, a control device (31) initiating the detection of the position of the intermediate layer (3) by the the position sensor (26) after reaching the intermediate position and the formation of a position signal representing the position of the intermediate layer (3) is provided, and the evaluation device (31) is designed so as to process the position signal to form a function signal representing the position of the intermediate layer (3).

13. A device according to one of Claims 8 to 12, **characterized in that** a pneumatic pressure sensor orientated towards the intermediate layer (3) or mechanical callipers is or are provided on the gripping head (6) as a position sensor (26).

14. A device according to Claim 13, **characterized in that** a pressure sensor forming and detecting a pressure head as a function of its position on the intermediate layer (3) is provided as a pneumatic pressure sensor.

## Revendications

1. Procédé de dépalettisation de piles de flans découpés empilées sur des palettes avec interposition d'intercalaires plats, selon lequel on positionne devant une pile de flans découpés, un outil de pénétration orienté sensiblement à l'horizontale et placé sur une tête de préhension, et on l'enfonce environ horizontalement sous la pile de flans découpés, et selon lequel on prélève la pile de flans découpés de l'intercalaire par un déplacement commandé de la tête de préhension, l'introduction correcte de l'outil de pénétration entre la pile de flans découpés et l'intercalaire étant contrôlée et un signal de fonctionnement qui dépend du déroulement et/ou du résultat de l'opération de pénétration étant élaboré, caractérisé en ce que l'outil de pénétration sous la pile de flans découpés est tout d'abord soulevé d'une courte distance, en ce qu'après le soulèvement de l'outil de pénétration, on vérifie la position de l'intercalaire, et en ce que l'on produit un signal de fonctionnement qui dépend de la position de l'intercalaire.

2. Procédé selon la revendication 1, caractérisé en ce que suite à un déroulement non correct relevé, de l'opération de pénétration, on produit en guise de signal de fonctionnement, un signal d'incident, et en ce qu'en raison du signal d'incident, on interrompt la poursuite du mouvement de la tête de préhension dans l'optique de remédier à l'incident.

3. Procédé selon la revendication 1 ou 2, caractérisé en ce que l'outil de pénétration, pour son positionnement devant la pile de flans découpés, est posé sur l'intercalaire.

4. Procédé selon la revendication 1, caractérisé en ce que l'on relève la position de l'intercalaire sous l'outil de pénétration soulevé, et en ce qu'un signal d'incident est produit lorsque l'outil de pénétration a soulevé l'intercalaire.

5. Procédé selon la revendication 1, caractérisé en ce que l'outil de pénétration est soulevé d'environ 10 mm pour le contrôle de la position de l'intercalaire.

6. Procédé selon la revendication 1, caractérisé en ce que l'on relève la position de l'intercalaire par voie optique.

7. Procédé selon la revendication 1, caractérisé en ce que l'on relève la position de l'intercalaire par voie pneumatique ou mécanique.

8. Dispositif de dépalettisation de piles de flans découpés (2) empilées sur des palettes (1) avec interposition d'intercalaires plats (3), comprenant une tête de préhension (6) déplaçable et, placé sur cette tête de préhension, un outil de pénétration (17, 18) orienté sensiblement à l'horizontale, qui, par déplacement de la tête de préhension, peut être positionné devant la pile de flans découpés, et qui, pour saisir une pile de flans découpés, peut être introduit entre la pile de flans découpés et l'intercalaire par un mouvement sensiblement horizontal, et qui ensuite, par déplacement de la tête de préhension, prélève de l'intercalaire, la pile de flans découpés ayant été saisie, un dispositif (26) destiné à contrôler l'introduction correcte de l'outil de pénétration entre la pile de flans découpés (2.1) et l'intercalaire étant associé à la tête de préhension, et le dispositif de contrôle (26) étant raccordé à un agencement de traitement (31) délivrant un signal de fonctionnement en fonction du déroulement de l'opération de pénétration, caractérisé en ce que le dispositif de contrôle (26) comprend des moyens (27, 28, 29) destinés à relever la position de l'intercalaire (3) et à engendrer un signal de fonctionnement correspondant à la position de l'intercalaire.

9. Dispositif selon la revendication 8, caractérisé en ce qu'un capteur de position (27) placé sur la tête de préhension (6) et orienté en direction de l'intercalaire (3), fait office de dispositif de contrôle (26).

10. Dispositif selon la revendication 9, caractérisé en ce que le capteur de position (27, 28, 29) est conçu et disposé de façon à relever la position de l'intercalaire (3) sous l'outil de pénétration (17, 18).

11. Dispositif selon l'une des revendications 8 à 10, caractérisé en ce qu'en guise de capteur de position (28), il est prévu sur la tête de préhension (6), un détecteur de lumière (27, 28, 29) orienté en direction de l'intercalaire (3) et comprenant une source lumineuse et un capteur recevant la lumière de la source lumineuse, réfléchie par l'intercalaire (3), et délivrant un signal de position correspondant, à l'agencement de traitement (31).

12. Dispositif selon l'une des revendications 8 à 11, caractérisé en ce qu'il est prévu un système d'entraînement déplaçant la tête de préhension (6) vers le haut, dans une position intermédiaire, après introduction de l'outil de pénétration (17, 18) entre la pile de flans découpés (2.1) et l'intercalaire (3), en ce qu'il est prévu un agencement de commande (31) qui amorce le relevé de la position de l'intercalaire (3) par le capteur de position (26) après que la position intermédiaire ait été atteinte, ainsi que la formation d'un signal de position représentant la position de l'intercalaire (3), et en ce que l'agencement de traitement (31) est conçu pour convertir le signal de position en un signal de fonctionnement représentant la position de l'intercalaire (3).

13. Dispositif selon l'une des revendications 8 à 12, caractérisé en ce que sur la tête de préhension (6) il est prévu en guise de capteur de position (26), un capteur de pression pneumatique dirigé vers l'intercalaire (3) ou un palpeur mécanique.

14. Dispositif selon la revendication 13, caractérisé en ce qu'en guise de capteur de pression pneumatique, il est prévu un capteur de pression formant et relevant une pression dynamique en fonction de sa position par rapport à l'intercalaire (3).
